# EUROPÄISCHE PATENTSCHRIFT

(11) **EP 1 370 602 B1**
(45) Veröffentlichungstag und Bekanntmachung des Hinweises auf die Patenterteilung: **18.08.2004**
(21) Anmeldenummer: 02712911.3
(22) Anmeldetag: 14.02.2002
(51) Int. Cl.: C08G 77/458, C08G 18/28, C08G 18/61, C09J 183/10, C09D 183/10

(54) **SILANTERMINIERTES POLYDIORGANOSILOXAN-URETHAN-COPOLYMER**
SILANE-TERMINATED POLYDIORGANOSILOXANE URETHANE COPOLYMER
COPOLYMERE DE POLYDIORGANOSILOXANE-URETHANE A TERMINAISON SILANE

(30) Priorität: 22.03.2001 DE 10113980
(43) Veröffentlichungstag der Anmeldung: 17.12.2003
(73) Patentinhaber: Consortium für elektrochemische Industrie GmbH, 81379 München (DE)
(72) Erfinder: SCHINDLER, Wolfram, 84577 Tüssling (DE); SCHÄFER, Oliver, 81377 München (DE); STANJEK, Volker, 81479 München (DE); PACHALY, Bernd, 84561 Mehring/Öd (DE)
(74) Vertreter: Fritz, Helmut, Dr.
(86) Internationale Anmeldenummer: PCT/EP2002/001581
(87) Internationale Veröffentlichungsnummer: WO 2002/077072

(56) Entgegenhaltungen:
- EP-A- 0 250 248
- WO-A-96/34029
- WO-A-96/34030

## Beschreibung

Die Erfindung betrifft silanterminierte Hybridpolymere auf Basis von Polydiorganosiloxan-Urethan-Copolymeren mit feuchtigkeitshärtenden Silanendgruppen, ein Verfahren zu deren Herstellung und deren Verwendung.

Die Eigenschaften von Polyurethanen und Siliconelastomeren sind in weiten Bereichen komplementär. Daher sollte die Kombination beider Systeme Materialien mit ausgezeichneten Eigenschaften zugänglich machen. Polyurethane zeichnen sich durch ihre gute mechanische Festigkeit, Elastizität und eine sehr gute Haftung und Abriebfestigkeit aus. Siliconelastomere dagegen besitzen eine ausgezeichnete Temperatur, UV-, und Bewitterungsstabilität. Dabei behalten sie ihre elastischen Eigenschaften bei tieferen Temperaturen bei und neigen deshalb auch nicht zur Versprödung. Daneben besitzen sie spezielle wasserabweisende und antihaftende Oberflächeneigenschaften.

Die Kombination der Vorteile beider Systeme führt nicht nur zu neuen Verbindungen mit niedrigen Glastemperaturen, geringen Oberflächenenergien, verbesserten thermischen und photochemischen Stabilitäten, geringer Wasseraufnahme und physiologisch inerten Materialien, sondern auch zu Materialien, bei denen die Eigenschaften durch das Verhältnis und die chemische Zusammensetzung der Silicon- und Polyurethanbestandteile einstellbar ist.

Untersuchungen wurden durchgeführt, um die schlechten Phasenverträglichkeiten der beiden Systeme zu überwinden. Durch Herstellung von Polymerblends konnten nur in wenigen speziellen Fällen ausreichende Verträglichkeiten erreicht werden. Erst mit der in J. Kozakiewicz, Prog. Org. Coat., 1996 (27), 123 beschriebenen Herstellung von Polydiorganosiloxan-Urethan-Copolymeren und in I. Yilgör, Polymer, 1984 (25), 1800 von Polydiorganosiloxan-Urea-Copolymeren konnte dieses Ziel erreicht werden. Die Umsetzung der Polymerbausteine erfolgt letztlich nach einer vergleichsweise einfachen Polyaddition, wie sie für die Herstellung von Polyurethanen angewendet wird. Dabei werden als Ausgangsmaterialien für die Siloxanbausteine hydroxyalkyl-terminierte Polysiloxane (Siloxan-Urethan-Copolymere) und aminoalkylterminierte Polysiloxane (Siloxan-Urea-Copolymere) verwendet. Diese bilden die Weichsegmente in den Copolymeren, analog zu den Polyethern in reinen Polyurethansystemen. Als Hartsegmente werden die gängigen Diisocyanate eingesetzt, wobei diese auch noch durch Zusatz von kurzkettigen Diolen, wie 1,4-Butandiol zur Erreichung höherer Festigkeiten modifiziert werden können. Die Umsetzung der Aminoverbindungen mit Isocyanaten erfolgt dabei spontan und benötigt in aller Regel keinen Katalysator. Die Umsetzung von Hydroxyverbindungen wird durch Zusatz von Katalysatoren - meist Zinnverbindungen - durchgeführt.

Die Silicon- und Isocyanat-Polymerbausteine sind in einem weiten Bereich problemlos mischbar. Die mechanischen Eigenschaften werden durch das Verhältnis der unterschiedlichen Polymerblöcke (Silicon-Weichsegmente und Urethan/Urea-Hartsegmente) und wesentlich durch das verwendete Diisocyanat bestimmt. Im Falle der Harnstoff-Copolymere werden fast ausschließlich thermoplastische Materialien erhalten. Durch die starken Wechselwirkungen der Wasserstoffbrücken zwischen den Harnstoffeinheiten besitzen diese Verbindungen einen definierten Schmelz- bzw. Erweichungspunkt. Diese sind bei den Urethan-Copolymeren deutlich geringer, dadurch bilden diese Materialien meist hochviskose Flüssigkeiten.

Herkömmliche Polysiloxane werden für Elastomere, Dichtungen, Kleb- und Dichtstoffe oder Antihaftbeschichtungen in Form thixotroper Pasten angewendet. Um die gewünschten Endfestigkeiten zu erreichen, wurden unterschiedliche Härtungswege der Massen entwickelt, mit dem Ziel, die gewünschten Strukturen zu festigen und die mechanischen Eigenschaften einzustellen. Meist müssen die Polymere aber durch den Zusatz von verstärkend wirkenden Additiven, wie beispielsweise hochdispersen Kieselsäuren abgemischt werden, um ausreichende mechanische Eigenschaften zu erreichen.

Bei den Härtungssystemen unterscheidet man im Wesentlichen zwischen Hochtemperatur vulkanisierenden Systemen (HTV) und Raumtemperatur vulkanisierenden Systemen (RTV). Bei den RTV-Massen gibt es sowohl ein- (1K) als auch zweikomponentige (2K) Systeme. In den 2K-Systmen werden die beiden Komponenten gemischt und damit katalytisch aktiviert und ausgehärtet. Der Härtungsmechanismus und der benötigte Katalysator können dabei unterschiedlich sein. Üblicherweise erfolgt die Härtung durch eine peroxidische Vernetzung, durch Hydrosilylierung mittels Platinkatalyse oder durch Silankondensation. Dabei muss ein Kompromiss zwischen Verarbeitungszeit und Aushärtzeit eingegangen werden. Die 1K-Systeme härten ausschließlich über Silankondensation unter Zutritt von Luftfeuchtigkeit aus. Dieser Härtungsmechanismus ist für eine einfache Verarbeitung der Materialien interessant, wie sie für Kleb- und Dichtstoffe benötigt wird. Unter Ausschluss von Feuchtigkeit sind die 1K-Systeme über längere Zeiträume lagerstabil. Die Aushärtung erfolgt vorwiegend über kondensationsvernetzende alkoxy-, acetoxy oder oximoterminierte Verbindungen.

Herkömmliche Polyurethane werden analog als 1K-Systeme oder 2K-Systeme eingesetzt. Die 1K-Massen härten dabei durch den Kontakt von isocyanathaltigen Prepolymeren mit der Luftfeuchtigkeit aus. Dabei wird die Isocyanatgruppe in eine Aminogruppe und Kohlendioxid abgebaut. Die gebildeten Aminoverbindung reagiert sofort mit weiterem Isocyanat. Das freiwerdende Kohlendioxid ist im Falle von Sprayschäumen für die Schaumerzeugung neben dem Treibgas erwünscht, kann aber in Kleb- und Dichtstoffen zu Problemen durch Blasenbildung bei der Anwendung führen. Ferner ist ein Nachteil, dass in der Regel niedrige Viskositäten für eine günstige Verarbeitung eingestellt werden müssen. Da die Polyurethanprepolymere meist sehr hohe Viskositäten aufzeigen, muss die Verarbeitung entweder bei höherer Temperatur durchgeführt werden oder dem Polymer müssen zur Viskositätserniedrigung Monomere oder kurzkettige Oligomere zugesetzt werden.

Kritisch ist, dass die noch freien Isocyanatgruppen auf Grund ihrer hohen Reaktivität auch ausgesprochen reizende und toxische Wirkungen entfalten können. Auch stehen einige Amine, die aus den monomeren Isocyanaten gebildet werden, im Verdacht krebserregend zu sein. Daher kann ein Restmonomergehalt oder der Zusatz von Monomeren in Zukunft aus toxikologischen Gesichtspunkten problematisch sein.
Eine Vielzahl von Untersuchungen beschäftigt sich daher auch mit der Herstellung isocyanatfreier Polyurethanprepolymere. Als ein vielversprechender Lösungsweg hat sich die Herstellung von silanvernetzenden Prepolymeren erwiesen. Dabei werden in der Regel isocyanathaltige Prepolymere mit Aminosilanen umgesetzt. Dadurch erhält man silanterminierte Polymere, wobei die Silangruppen weitere reaktive unter Feuchtigkeitszutritt vernetzende Substituenten wie Alkoxy-, Acetoxy oder Oximatogruppen tragen können. Die Härtung dieser Materialien erfolgt dann analog zu den oben beschriebenen Siliconen. Allerdings muss bei diesen Polymeren ein Kompromiss zwischen den mechanischen Eigenschaften, weitgehend über das Molekulargewicht bestimmt, und den damit verbundenen Viskosität erzielt werden. Hohe Molekulargewichte sind für gute Reißfestigkeiten wichtig, allerdings besitzen diese Systeme sehr hohe Viskositäten und können nur noch bei höheren Temperaturen oder durch den Zusatz von Lösungsmitteln oder Weichmachern verarbeitet werden.

Der Härtungsmechanismus durch Silankondensation ist auch für Polydiorganosiloxan-Urea-Copolymere bekannt und wird beispielsweise in WO 96/34030 und EP-A-250 248 zur Herstellung spezieller Antihaftbeschichtungen eingesetzt. Die Synthese derartiger Polymere kann nur in Lösung oder durch Coextrusion erfolgen, da die erhaltenen Copolymere fast ausschließlich fest sind und vor Vernetzung thermoplastische Eigenschaften besitzen. Daher können sie auch nur bei höheren Temperaturen oder durch Lösungsauftrag verarbeitet werden. In WO 95/21206 sind mit hydrolysierbaren Silanen terminierte Polyurethancopolymere beschrieben, die durch Umsetzung von einem Isocyanat-terminierten Polyurethan-Silicon-Polyether-Prepolymeren mit Diamin-Kettenverlängerer und Aminosilan in wässriger Dispersion hergestellt werden. Diese Polyurethancopolymere sind nur als Dispersion verarbeitbar. Durch die Anwesenheit von Wasser entstehen vielfach Verarbeitungsprobleme, beispielsweise bei der Abmischung mit wasserempfindlichen Rezepturbestandteilen oder auch Beeinträchtigungen bei der Applikation durch Schrumpf nach der Trocknung.

Es bestand die Aufgabe über Silangruppen kondensationsfähige Polydiorganosiloxan-Urethan-Copolymere bereitzustellen, welche hohe Molekulargewichte und dadurch günstige mechanische Eigenschaften aufweisen und gute Verarbeitungseigenschaften, wie niedrige Viskosität und Lösungsmittel- und Wasserfreiheit zeigen.

Gegenstand der Erfindung ist silanterminiertes Polydiorganosiloxan-Urethan-Copolymer der allgemeinen Formel 1 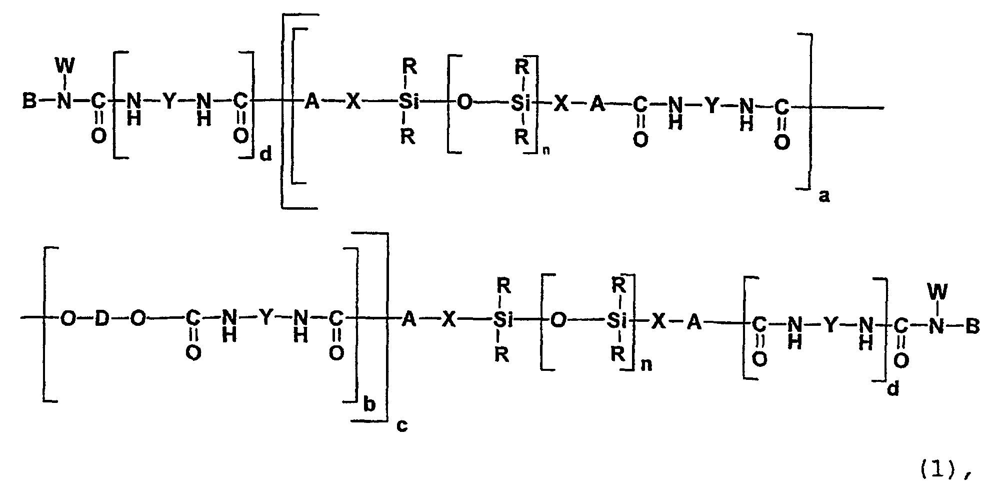 worin
- **R**: einen einwertigen, gegebenenfalls durch Fluor oder Chlor substituierten Kohlenwasserstoffrest mit 1 bis 20 Kohlenstoffatomen,
- **X**: einen Alkylen-Rest mit 1 bis 20 Kohlenstoffatomen, in dem einander nicht benachbarte Methyleneinheiten durch Gruppen -O- ersetzt sein können,
- **A**: ein Sauerstoffatom oder eine Aminogruppe -NR'-,
- **R'**: Wasserstoff oder einen Alkylrest mit 1 bis 10 Kohlenstoffatomen,
- **Y**: einen gegebenenfalls durch Fluor oder Chlor substituierten Kohlenwasserstoffrest mit 1 bis 20 Kohlenstoffatomen,
- **D**: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können,
- **B**: einen Rest der allgemeinen Formel 2

-Z-Si(R¹)ₘ(R'')₃₋ₘ (2),
- **Z**: einen Alkylen-Rest mit 1 bis 10 Kohlenstoffatomen,
- **R**^{**1**}: einen einwertigen, gegebenenfalls durch Fluor oder Chlor substituierter Kohlenwasserstoffrest mit 1 bis 12 Kohlenstoffatomen,
- **R''**: einen mit Feuchtigkeit reaktiven Rest, der ausgewählt wird aus C₁-C₄-Alkoxy-, C₁-C₂₀-Acyl-, C₁-C₆-Alkylaminooxy- und C₁-C₆-Alkyloximoresten,
- **W**: einen Rest **B** oder Wasserstoff,
- **m**: den Wert 0, 1 oder 2,
- **n**: eine ganze Zahl von 1 bis 2000,
- **a**: eine ganze Zahl von mindestens 1,
- **b**: 0 oder eine ganze Zahl von 1 bis 30,
- **c**: eine ganze Zahl von 1 bis 30 und
- **d**: den Wert 0 oder 1 bedeuten,
mit der Maßgabe, daß, bezogen auf die Summe der Urethan- und Harnstoffgruppen, mindestens 30 Mol-% Urethangruppen enthalten sind.

Das silanterminierte Polydiorganosiloxan-Urethan-Copolymer der allgemeinen Formel 1 zeigt hohe Molekulargewichte bei guten Verarbeitungseigenschaften. Die Endeigenschaften der vulkanisierten Polymere, wie die Elastizität und die Reißfestigkeit der Polymere wird durch das Verhältnis der Urethan- und Harnstoffeinheiten und der Polydiorganosiloxanketten und gegebenenfalls der Alkylenketten **D** erreicht. Die erfindungsgemäßen Polymere besitzen Eigenschaften, wie sie für die Polyurethane und Polysiloxane bzw. daraus hergestellt Copolymeren bereits bekannt sind. Diese Eigenschaften werden bei gleichzeitiger Silankondensation zur Vernetzung und Aushärtung der Copolymeren erreicht.

Das silanterminierte Polydiorganosiloxan-Urethan-Copolymer der allgemeinen Formel 1 stellt ein Bindeglied zwischen den isocyanatvernetzenden Polyurethanverbindungen und den silanvernetzenden Siliconsystemen dar. Durch ihren speziellen Aufbau ist im Gegensatz zu bereits bekannten Polydiorganosiloxan-Urea-Copolymeren ein deutlich erweitertes Einsatzgebiet möglich, da Verarbeitungseigenschaften, wie die Viskositäten leicht und variabel eingestellt werden können. Dies ist für eine Vielzahl von Anwendungen von besonderem Interesse.

Vor allem durch den Einsatz von Urethangruppen anstatt der Harnstoffgruppen kann eine deutliche Viskositätserniedrigung erreicht werden. Diese maßgeschneiderten Copolymere ermöglichen den wasser- und lösungsmittelfreien Einsatz in Anwendungen wie z.B. in Kleb- und Dichtstoffen oder für Oberflächenbeschichtungen, bei denen ein ausreichend niedrig viskoses Polymer zur Verarbeitung bei Raumtemperatur erwünscht ist.

Vorzugsweise bedeutet **R** einen einwertigen, Kohlenwasserstoffrest mit 1 bis 6 Kohlenstoffatomen, insbesondere nicht substituiert. Besonders bevorzugte Reste **R** sind Methyl, Ethyl, Vinyl und Phenyl.

Vorzugsweise bedeutet **X** einen Alkylen-Rest mit 2 bis 10 Kohlenstoffatomen. Vorzugsweise ist der Alkylen-Rest **X** nicht unterbrochen.

Vorzugsweise bedeutet **A** ein Sauerstoffatom.

Vorzugsweise bedeutet **R'** Wasserstoff oder einen Alkylrest mit 1 bis 3 Kohlenstoffatomen, insbesondere Wasserstoff.
Vorzugsweise bedeutet **A** ein Sauerstoffatom.
Vorzugsweise bedeutet **Y** einen Kohlenwasserstoffrest mit 3 bis 13 Kohlenstoffatomen, der vorzugsweise nicht substituiert ist.

Vorzugsweise bedeutet **D** einen Alkylenrest mit mindestens 10, insbesondere mindestens 20 Kohlenstoffatomen und höchstens 100, insbesondere höchstens 50 Kohlenstoffatomen.
Ebenfalls vorzugsweise bedeutet D einen Polyoxyalkylenrest, insbesondere Polyoxyethylenrest oder Polyoxypropylenrest mit mindestens 20, insbesondere mindestens 100 Kohlenstoffatomen und höchstens 800, insbesondere höchstens 200 Kohlenstoffatomen.
Vorzugsweise ist der Rest **D** nicht substituiert.

Vorzugsweise bedeutet **Z** einen Alkylen-Rest mit 1 bis 6 Kohlenstoffatomen, insbesondere Methylen, Ethylen und Propylen.

**R**^{**1**} bedeutet vorzugsweise einen unsubstituierten Kohlenwasserstoffrest mit 1 bis 4 Kohlenstoffatomen, insbesondere Methyl oder Ethyl.

Vorzugsweise bedeutet **R''** einen Methoxy-, Ethoxy oder Acetoxyrest.

**n** bedeutet vorzugsweise eine ganze Zahl von mindestens 3, insbesondere mindestens 25 und vorzugsweise höchstens 800, insbesondere höchstens 400.

Vorzugsweise bedeutet **a** eine ganze Zahl von höchstens 10, insbesondere höchstens 5.

Wenn **b** ungleich 0, bedeutet b vorzugsweise eine ganze Zahl von höchstens 10, insbesondere höchstens 5 besonders bevorzugt höchstens 10.

**c** bedeutet vorzugsweise eine ganze Zahl von höchstens 10, insbesondere höchstens 5.

Vorzugsweise sind im Copolymer der allgemeinen Formel 1, bezogen auf die Summe der Urethan- und Harnstoffgruppen, mindestens 50 Mol-%, insbesondere mindestens 75 Mol-% Urethangruppen enthalten.

Die Copolymere der allgemeinen Formel 1 können hergestellt werden durch Umsetzung von aminoalkyl- oder hydroxyalkylterminierten Polydiorganosiloxanen der allgemeinen Formel 3 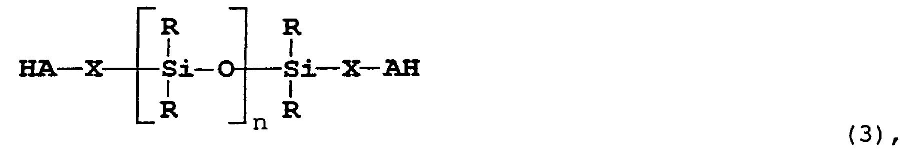 mit Diisocyanaten der allgemeinen Formel 4

OCN-Y-NCO (4),

und Silanen der allgemeinen Formel 5

E[-Z-Si(R¹)ₘ(R'')₃₋ₘ]ₚ (5),

und falls **b** mindestens 1 ist, zusätzlich mit α,ω-OHterminierten Alkylenen der allgemeinen Formel 6

HO-D-OH (6),

wobei **R, X, A, R', Y, D, B, Z, R**^{**1**}**, R'', W, m, n, a, b, c** und **d** die bei den allgemeinen Formeln 1 und 2 angegebenen Bedeutungen aufweisen und
- **p**: den Wert 1 bedeutet und
- **E**: eine Isocyanatgruppe oder eine Aminogruppe -NHR''', wobei **R'''** Wasserstoff oder einen einwertigen, gegebenenfalls durch Fluor oder Chlor substituierter Kohlenwasserstoffrest mit 1 bis 12 Kohlenstoffatomen bedeuten, oder
- **p**: den Wert 2 bedeutet und
- **E**: einen -NH-Rest bedeutet.

Die Polydiorganosiloxane der allgemeinen Formel 3 sind vorzugsweise weitgehend frei von Kontaminationen aus höherfunktionellen und monofunktionellen Bestandteilen. Monofunktionelle Bestandteile führen bei der Umsetzung zum Polymer zu nicht reaktiven Endgruppen, die in der Endterminierung durch die Silane nicht mehr umgesetzt werden können. Nicht härtbare Anteile führen meist zu klebrigen Produkten, die teilweise zu einem unerwünschten Ausbluten im Vulkanisat führen können. Höherfunktionelle Polydiorganosiloxane sind ebenso unerwünscht, da diese bei der Umsetzung mit Diisocyanaten zur Bildung von Vernetzungspunkten führen, die die Viskosität der Materialien deutlich erhöhen und z.T. bereits eine Vorvernetzung des Materials während der Synthese verursachen.
Die Herstellung geeigneter Aminoalkylpolydiorganosiloxane ist bekannt, ebenso die Herstellung von Hydroxyalkylpolydiorganosiloxanen, welche z.B. über Hydrosilylierung von α,ω-Dihydridopolydiorganosiloxane mit α,ω-Dihydroxyalkylenen erfolgt. Derartige Produkte sind kommerziell verfügbar, wie beispielsweise die Siliconöle Tegomer® H-Si 2111 / 2311 / 2711 der Goldschmidt AG, Deutschland oder IM 15, IM 22 der Wacker-Chemie GmbH, Deutschland.

Beispiele für Diisocyanate der allgemeinen Formel 4 sind aliphatische Verbindungen wie Isophorondiiscyanat, Hexamethylen-1,6-diisocyanat, Tetramethylen-1,4-diisocyanat und Methylendicyclohexy-4,4'-diisocyanat oder aromatische Verbindungen wie Methylendiphenyl-4,4'-diisocyanat, 2,4-Toluoldiisocyanat, 2,5-Toluoldiisocyanat, 2,6-Toluoldiisocyanat, m-Phenylendiisocyanat, p-Phenylendiisocyanat, m-Xyloldiisocyanat, Tetramethyl-mxyloldiisocyanat oder Mischungen dieser Isocyanate. Ein Beispiel für kommerziell erhältliche Verbindungen sind die Diisocyanate der DESMODUR®-Reihe (H,I,M,T,W) der Bayer AG, Deutschland. Bevorzugt sind aliphatische Diisocyanate, bei denen Y ein Alkylenrest ist, da diese zu deutlich geringer viskosen Materialien führen, die zudem auch noch verbesserte UV-Stabilitäten zeigen, welche bei einer Außenanwendung der Polymere von Vorteil ist. Standard Polyurethansysteme mit aromatischen Diisocyanaten neigen in der Regel zur Vergilbung unter Abbau der Polymere und müssen aufwendiger gegen UV- und Lichteinwirkung geschützt werden.

Die α,ω-OH-terminierten Alkylene der allgemeinen Formel 6 sind bevorzugt Polyalkylene oder Polyoxyalkylene. Diese sollten aus den gleichen Gründen, wie bei den Polydiorganosiloxanen beschreiben, weitgehend frei von Kontaminationen aus mono-, tri- oder höherfunktionellen Polyoxyalkylenen sein. Hierbei können Polyetherpolyole, Polytetramethylendiole, Polyesterpolyole, Polycaprolactondiole aber auch α,ω-OHterminierte Polyalkylene auf Basis von Polyvinylacetat, Polyvinylacetatethylencopolymere, Polyvinylchloridcopolymer, Polyisobutlydiole eingesetzt werden. Bevorzugt werden dabei Polyoxyalkyle verwendet, besonders bevorzugt Polypropylenglykole. Derartige Verbindungen sind als Basismaterialien unter anderem für Polyurethan-Weichschäume und für Beschichtungsanwendungen kommerziell mit Molekularmassen Mn bis über 10 000 erhältlich. Beispiele hierfür sind die BAYCOLL® Polyetherpolyole und Polyesterpolyole der Bayer AG, Deutschland oder die Acclaim® Polyetherpolyole der Lyondell Inc., USA. Es können auch monomere α,ω-Alkylendiole, wie Ethylenglykol, Propandiol, Butandiol oder Hexandiol eingesetzt werden.

Die Silane der allgemeinen Formel 5 können reaktive Gruppen tragen, die mit Isocyanatgruppen reagieren. Bevorzugt sind hier entsprechende Aminosilane. Ferner können auch Isocyanatosilane eingesetzt werden, die entsprechend mit den OH- und NH-Funktionen der Prepolymere umgesetzt werden können. Als reaktive Gruppen, die unter Feuchtigkeit aushärten, werden speziell Alkoxygruppen eingesetzt. Beispiele für geeignete Silane sind, Aminopropyltriethoxysilan, Aminopropyltrimethoxysilan, Aminopropylmethyldiethoxysilan, Aminopropylmethyldimethoxysilan, Aminopropyldimethylmethoxysilan, Aminopropyldimethylethoxysilan, Aminopropyltri(methylethylketoximo)silan, Aminopropylmethyldi(methylethylketoximo)silan, Bis-(Triethoxysilylproyl)amin, Bis-(Trimethoxysilylproyl)amin, Aminomethyltriethoxysilan, Aminomethyltrimethoxysilan, Aminomethylmethyldiethoxysilan, Aminomethylmethyldimethoxysilan, Isocyanatopropyltriethoxysilan, Isocyanatopropyltrimethoxysilan, Isocyanatopropylmethyldiethoxysilan, Isocyanatopropylmethyldimethoxysilan, Isocyanatomethyltrimethoxysilan, Isocyanatomethyltriethoxysilan, Isocyanatomethylmethyldiethoxysilan, Isocyanatomethylmethyldimethoxysilan, Isocyanatomethyldimethylmethoxysilan, Isocyanatomethyldimethylethoxysilan. Besonders bevorzugt sind die Isocyanatodi- und trimethoxysilane, zur Umsetzung von OH/NH-terminierten Prepolymeren hergestellt aus Hydroxyalkylpolydiorganosiloxanen der allgemeinen Formel 3 und Polyethern der allgemeinen Formel 6 mit Diisocyanaten der allgemeinen Formel 4. Eine Synthese über isocyanatterminierte Prepolymere und Aminosilane der allgemeinen Formel 5 ist ebenso möglich.
Bevorzugt werden Isocyanatosilane der allgemeinen Formel 5 eingesetzt, weil dadurch Urethaneinheiten eingebaut werden, die zu niedrigeren Viskositäten als Harnstoffeinheiten führen.

Bei der Herstellung des Copolymeren der allgemeinen Formel 1 kann Aminoalkylpolydiorganosiloxan der allgemeinen Formel 3, bei der **A** eine Aminogruppe -NR'- bedeutet, oder Hydroxyalkylpolydiorganosiloxan der allgemeinen Formel 3, bei der **A** eine Hydroxygruppe -OH bedeutet oder ein Gemisch von Amino- und Hydroxyalkylpolydiorganosiloxan, mit oder ohne α,ω-OH-terminierte Alkylene der allgemeinen Formel 6 eingesetzt werden.

Bei der Herstellung des Copolymeren der allgemeinen Formel 1 beträgt das eingesetzte Verhältnis an NCO-Gruppen der Diisocyanate der allgemeinen Formel 4 zur Summe der HA-Gruppen und HO-Gruppen der hydroxyalkylterminierten Polydiorganosiloxane der allgemeinen Formel 3 und gegebenenfalls α,ω-OH-terminierten Alkylene der allgemeinen Formel 6 vorzugsweise 0,5 - 1,5, insbesondere 0,8 - 1,2.

Bei der Herstellung des Copolymeren der allgemeinen Formel 1 beträgt die Reaktionstemperatur bevorzugt 0 - 150 °C, insbesondere 20 - 100 °C und besonders bevorzugt 50 - 90 °C.

Die Herstellung der oben beschriebenen Prepolymere und die anschließende Endterminierung kann sowohl in Lösung als auch in Festsubstanz erfolgen. Wesentlich dabei ist, dass für die gewählte Polymermischung unter den Reaktionsbedingungen eine optimale und homogene Durchmischung der Bestandteile erfolgt und eine Phasenunverträglichkeit gegebenenfalls durch Lösungsvermittler verhindert wird. Die Herstellung hängt dabei vom verwendeten Lösungsmittel ab. Ist der Anteil der Hartsegmente wie Urethan- oder Harnstoffeinheiten groß, so muss gegebenenfalls ein Lösungsmittel mit einem hohen Löslichkeitsparameter wie beispielsweise DMF gewählt werden. Für die meisten Synthesen hat sich THF als ausreichend gut geeignet erwiesen.
Vorzugsweise werden alle Bestandteile in einem inerten Lösungsmittel gelöst. Besonders bevorzugt ist eine Synthese ohne Lösungsmittel.

In einer bevorzugten Ausführungsform bei der Herstellung des Copolymeren der allgemeinen Formel l wird das Polydiorganosiloxan der allgemeinen Formel 3 mit dem Diisocyanat der allgemeinen Formel 4 in einem inerten Lösungsmittel umgesetzt, anschließend mit dem Dihydroxyalkylen der allgemeinen Formel 6 und wahlweise mit weiterem Diisocyanat der allgemeinen Formel 4 weiter umgesetzt und dann eine Endterminierung im Falle von OH-terminierten Prepolymeren mit einem Isocyanatosilan der allgemeinen Formel 5, oder im Falle von NCO-terminierten Prepolymeren mit Aminosilan der allgemeinen Formel 5, durchgeführt, wobei die Reihenfolge von Polydiorganosiloxan der allgemeinen Formel 3 und Dihydroxyalkylen der allgemeinen Formel 6 auch umgedreht werden kann.

In einer weiteren bevorzugten Ausführungsform bei der Herstellung des Copolymeren der allgemeinen Formel 1 wird erst das Polydiorganosiloxan der allgemeinen Formel 3 mit dem Diisocyanat der allgemeinen Formel 4 umgesetzt, anschließend mit dem Dihydroxyalkylen der allgemeinen Formel 6 und wahlweise mit weiterem Diisocyanat der allgemeinen Formel 4 weiter umgesetzt und dann eine Endterminierung im Falle von OH-terminierten Prepolymeren mit einem Isocyanatosilan der allgemeinen Formel 5, oder im Falle von NCO-terminierten Prepolymeren mit Aminosilan der allgemeinen Formel 5, durchgeführt, wobei die Reihenfolge von Polydiorganosiloxan der allgemeinen Formel 3 und Dihydroxyalkylen der allgemeinen Formel 6 auch umgedreht werden kann.

Für die Reaktion ohne Lösungsmittel ist die Homogenisierung der Mischung von entscheidender Bedeutung bei der Umsetzung. Ferner kann die Polymerisation auch durch die Wahl der Reaktionsfolge bei einer Stufensynthese gesteuert werden.

Die Herstellung sollte für eine bessere Reproduzierbarkeit generell unter Ausschluss von Feuchtigkeit und unter Schutzgas, üblicherweise Stickstoff oder Argon erfolgen, um eine vorzeitige Aushärtung durch Hydrolyse der Silangruppen zu vermeiden. Ferner sollten die eingesetzten Polymerbausteine vorher ausgeheizt werden, um niedermolekulare Verunreinigungen und Wasserspuren zu entfernen.

Die Umsetzung erfolgt vorzugsweise, wie bei der Herstellung von Polyurethanen üblich, durch Zugabe eines Katalysator. Geeignete Katalysatoren für die Herstellung sind Dialkylzinnverbindungen, wie beispielsweise Dibutylzinndilaurat, Dibutylzinndiacetat, oder tertiäre Amine wie beispielsweise N,N-Dimethylcyclohexanamin, 2-Dimethylaminoethanol, 4-Dimethylaminopyridin.

Die Katalysatormengen betragen vorzugsweise 0,01 - 5 Gew.-%, insbesondere 0,01 - 2 %, besonders bevorzugt 0,01 - 0,5 %, jeweils bezogen auf die Summe der Gewichte von Diisocyanaten der allgemeinen Formel 4, hydroxyalkylterminierten Polydiorganosiloxanen der allgemeinen Formel 3, Silanen der allgemeinen Formel 5 und gegebenenfalls α,ω-OH-terminierten Alkylenen der allgemeinen Formel 6.

Die Reaktionsverfolgung kann über verschiedene Analysemethoden durchgeführt werden. Die Umsetzung ist abgeschlossen, wenn die NCO-Bande im Infrarotspektrum nicht mehr nachweisbar ist.

Bevorzugte Anwendungen der silanterminierten Polydiorganosiloxan-Urethan-Copolymere der allgemeinen Formel 1 sind feuchtigkeitshärtendes Polymer in reiner Form, als Bestandteil in Kleb- und Dichtstoffen, als Basis für thermoplastische und vulkanisierte Elastomere, für Membrane, wie selektiv gasdurchlässige Membrane, als härtbare Zusatzstoffe in Polymerblends, oder für Beschichtungsanwendungen z.B. in Antihaftbeschichtungen, gewebeverträglichen Überzügen, flammgehemmten Überzügen und als biokompatible Materialien.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 20°C bestimmt. Die Molekularmassen wurden mittels GPC in Toluol (0,5 ml/min) bei 23 °C bestimmt (Säule: PLgel Mixed C + PLgel 100 A, Detektor: RI ERC7515)

### Beispiel 1: Herstellung von silanterminierten PDMS-Urethan-Copolymer ohne Lösungsmittel

### a) Synthese des Copolymers durch Umsetzung des Siliconöls mit Diisocyanat. und Isocyanatosilan in einer Stufe:

392,0 g Bis-Hydroxyhexylpolydimethylsiloxan (Mn = 5600) werden bei 60 °C eine Stunde im Vakuum ausgeheizt und mit Stickstoff überlagert, anschließend mit 250 ppm Dibutylzinndilaurat (entsprechend 50 ppm Zinn) versetzt und bei 80 - 85 °C durch rasches Zutropfen von 9,4 g Hexamethylendiisocyanat und 7,0 g Isocyanatopropyltriethoxysilan umgesetzt und weitere drei Stunden gerührt. Man erhält ein farbloses, klares Polymer mit einer Viskosität von 46000 mPas bei einem Mn von 23600.

### b) Synthese des Copolymers durch Umsetzung des Siliconöls mit Diisocyanat und Aminosilan in einer Stufe:

252,0 g Bis-Hydroxyhexylpolydimethylsiloxan (Mn = 5600) werden bei 60 °C eine Stunde im Vakuum ausgeheizt und mit Stickstoff überlagert, anschließend mit 250 ppm Dibutylzinndilaurat (entsprechend 50 ppm Zinn) versetzt und bei 80 - 85 °C durch rasches Zutropfen von 13,3 g Isophorondiisocyanat und 6,6 g Aminopropyltriethoxysilan umgesetzt und weitere drei Stunden gerührt. Man erhält ein farbloses, klares Polymer mit einer Viskosität von 28000 mPas bei einem Mn von 13400. Im Copolymer sind 75 Mol-% Urethangruppen, bezogen auf die Summe der Urethan- und Harnstoffgruppen enthalten.

### c) Synthese des Copolymers durch stufenweise Umsetzung des Siliconöls mit Diisocyanat und Isocyanatosilan:

392,0 g Bis-Hydroxyhexylpolydimethylsiloxan (Mn = 5600) werden bei 60 °C eine Stunde im Vakuum ausgeheizt, mit Stickstoff überlagert, mit 250 ppm Dibutylzinndilaurat (entsprechend 50 ppm Zinn) versetzt und anschließend mit 9,4 g Hexamethylendiisocyanat zwei Stunden bei 80 - 85 °C umgesetzt. Das Prepolymer wird dann mit 5,8 g Isocyanatopropyltrimethoxysilan bei 80 - 85 °C weitere zwei Stunden umgesetzt. Man erhält ein farbloses, klares Polymer mit einer Viskosität von 43700 mPas bei einem Mn von 18500.

### Beispiel 2: Herstellung von silanterminierten PDMS-Urethan-Urea-Copolymer ohne Lösungsmittel

a) 224,0 g Bis-Hydroxyhexylpolydimethylsiloxan (Mn = 5600) und 16,0 g Bis-Aminopropylpolydimethylsiloxan (Mn = 1600) werden bei 60 °C eine Stunde im Vakuum ausgeheizt und mit Stickstoff überlagert, anschließend mit 250 ppm Dibutylzinndilaurat (entsprechend 50 ppm Zinn) versetzt und bei 80 - 85 °C durch rasches Zutropfen von 7,4 g Isophorondiisocyanat und 8,3 g Isocyanatopropyltriethoxysilan umgesetzt und weitere drei Stunden gerührt. Man erhält ein farbloses, klares Polymer mit einer Viskosität von 18000 mPas bei einem Mn von 10200. Im Copolymer sind 85 Mol-% Urethangruppen, bezogen auf die Summe der Urethan- und Harnstoffgruppen enthalten.
b)168,0 g Bis-Hydroxyhexylpolydimethylsiloxan (Mn = 5600) und 48,0 g Bis-Aminopropylpolydimethylsiloxan (Mn = 1600) werden bei 60 °C eine Stunde im Vakuum ausgeheizt, mit Stickstoff überlagert, mit 250 ppm Dibutylzinndilaurat (entsprechend 50 ppm Zinn) versetzt und bei 80 - 85 °C durch rasches Zutropfen von 8,8 g Isophorondiisocyanat und 9,9 g Isocyanatopropyltriethoxysilan umgesetzt und weitere drei Stunden gerührt. Man erhält ein farbloses, klares Polymer mit einer Viskosität von 150 000 mPas bei einem Mn von 8000. Im Copolymer sind 62 Mol-% Urethangruppen, bezogen auf die Summe der Urethan- und Harnstoffgruppen enthalten.

### Beispiel 3: Herstellung von silanterminiertem PDMS-Urethan-Copolymer mit Lösungsmittel

392,0 g Bis-Hydroxyhexylpolydimethylsiloxan (Mn = 5600) werden bei 60 °C eine Stunde im Vakuum ausgeheizt, mit Stickstoff überlagert, mit 200 ml trockenem THF und 250 ppm Dibutylzinndilaurat (entsprechend 50 ppm Zinn) versetzt und anschließend mit 9,4 g Hexamethylendiisocyanat zwei Stunden bei 65 - 70 °C umgesetzt. Das Prepolymer wird dann mit 5,8 g Isocyanatopropyltrimethoxysilan weitere zwei Stunden umgesetzt. Man erhält nach Eindampfen des Lösungsmittels ein farbloses, klares Polymer mit einer Viskosität von 25600 mPas bei einem Mn von 13900.

### Beispiel 4: Herstellung von silanterminierten PDMS-Urethan-Polyether-Copolymeren ohne Lösungsmittel

a)Synthese des Prepolymers aus Siliconöl und Polyether durch Umsetzung eines Gemisches der beiden Polymerbausteine: 21,3 g Polypropylenglykol (Mn = 425) werden mit 211,8 g Bis-Hydroxyhexylpolydimethylsiloxan (Mn = 2000) vermischt und bei 60 °C eine Stunde im Vakuum ausgeheizt und mit Stickstoff überlagert, anschließend mit 250 ppm Dibutylzinndilaurat (entsprechend 50 ppm Zinn) versetzt und bei 80 - 85 °C durch rasches Zutropfen mit 16,7 g Isophorondiisocyanat umgesetzt und weitere zwei Stunden gerührt. Das so erhaltene OH-terminierte Prepolymer wird dann mit 37,1 g Isocyanatopropyltriethoxysilan bei 80 - 85 °C weitere zwei Stunden umgesetzt. Man erhält ein farbloses, klares Polymer mit einer Viskosität von 5000 mPas bei einem Mn von 11000.
b) Synthese des Prepolymers aus Siliconöl und Polyether durch stufenweise Umsetzung der beiden Polymerbausteine: 42,5 g Polypropylenglykol (Mn = 425) werden bei 60 °C eine Stunde im Vakuum ausgeheizt, mit Stickstoff überlagert, mit 250 ppm Dibutylzinndilaurat (entsprechend 50 ppm Zinn) versetzt und anschließend mit 44,4 g Isophorondiisocyanat zwei Stunden bei 80 - 85 °C umgesetzt. 106,4 g Bis-Hydroxyhexylpolydimethylsiloxan (Mn = 5600) (vorher ebenfalls bei 60 °C eine Stunde im Vakuum ausgeheizt) werden rasch zugegeben und weitere zwei Stunden bei 80 °C gerührt. Das Prepolymer wird dann mit 49,5 g Isocyanatopropyltriethoxysilan bei 80 - 85 °C weitere zwei Stunden umgesetzt. Man erhält ein farbloses, klares Polymer mit einer Viskosität von 4.100 mPas bei einem Mn von 12000.

### Beispiel 5: Herstellung von silanterminiertem PDMS-Urethan-Polyether-Copolymer mit Lösungsmittel

10,6 g Polypropylenglykol (Mn = 425) werden bei 60 °C eine Stunde im Vakuum ausgeheizt, mit Stickstoff überlagert, mit 300 ml trockenem THF und 250 ppm Dibutylzinndilaurat (entsprechend 50 ppm Zinn) versetzt und anschließend mit 11,1 g Isophorondiisocyanat zum Sieden erhitzt (65 - 70 °C) und zwei Stunden umgesetzt. 280,0 g Bis-Hydroxyhexylpolydimethylsiloxan (Mn = 5600) (vorher ebenfalls bei 60 °C eine Stunde im Vakuum ausgeheizt) werden rasch zugegeben und weitere zwei Stunden bei 65 - 70 °C im siedendem THF gerührt. Das Prepolymer wird dann mit 12,4 g Isocyanatopropyltriethoxysilan weitere zwei Stunden umgesetzt. Man erhält nach Eindampfen des Lösungsmittels ein farbloses, klares Polymer mit einer Viskosität von 2400 mPas bei einem Mn von 10500.

### Beispiel 6: Herstellung eines silanterminierten PDMS-Urea-Copolymeren mit Lösungsmittel (Vergleichsbeispiel)

a)100,0 g Bis-Aminopropylpolydimethylsiloxan (Mn = 1600, hergestellt nach EP-A-250 248) werden bei 60 °C eine Stunde im Vakuum ausgeheizt, mit Stickstoff überlagert, mit 80 ml trockenem THF versetzt, anschließend 8,4 g Hexamethylendiisocyanat und 6,5 g Isocyanatopropyltriethoxysilan rasch zudosiert und bei Raumtemperatur umgesetzt. Danach eine weitere Stunde zum Sieden erhitzt (65 - 70 °C). Das THF wird im Vakuum abgdampft und man erhält ein farbloses, leicht gelbliches Polymer mit einem Erweichungsbereich von 80 - 90 °C.
b)100,0 g Bis-Aminopropylpolydimethylsiloxan (Mn = 7600, hergestellt nach EP-A-250 248) werden bei 60 °C eine Stunde im Vakuum ausgeheizt, mit Stickstoff überlagert, mit 150 ml trockenem THF versetzt, anschließend 1,77 g Hexamethylendiisocyanat und 1,48 g Isocyanatopropyltriethoxysilan rasch zudosiert und bei Raumtemperatur umgesetzt. Danach eine weitere Stunde zum Sieden erhitzt (65 - 70 °C). Das THF wird im Vakuum abgdampft und man erhält ein farbloses, leicht gelbliches Polymer mit einem Erweichungsbereich von 90 - 95 °C.

## Patentansprüche

1. Silanterminiertes Polydiorganosiloxan-Urethan-Copolymer der allgemeinen Formel 1 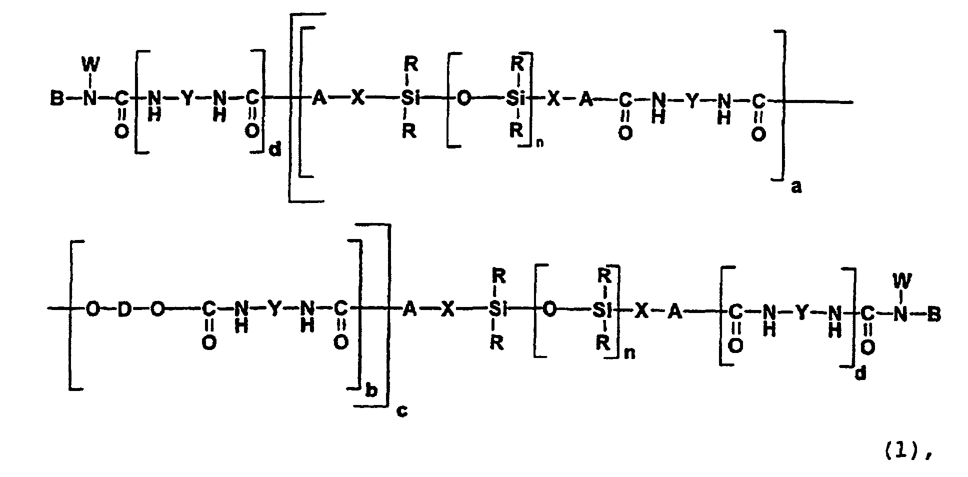 worin
**R** einen einwertigen, gegebenenfalls durch Fluor oder Chlor substituierten Kohlenwasserstoffrest mit 1 bis 20 Kohlenstoffatomen,
**X** einen Alkylen-Rest mit 1 bis 20 Kohlenstoffatomen, in dem einander nicht benachbarte Methyleneinheiten durch Gruppen -O- ersetzt sein können,
**A** ein Sauerstoffatom oder eine Aminogruppe -NR'-,
**R'** Wasserstoff oder einen Alkylrest mit 1 bis 10 Kohlenstoffatomen,
**Y** einen gegebenenfalls durch Fluor oder Chlor substituierten Kohlenwasserstoffrest mit 1 bis 20 Kohlenstoffatomen,
**D** einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können,
**B** einen Rest der allgemeinen Formel 2
-Z-Si(R¹)ₘ(R'')₃₋ₘ (2),
**Z** einen Alkylen-Rest mit 1 bis 10 Kohlenstoffatomen,
**R**^{**1**} einen einwertigen, gegebenenfalls durch Fluor oder Chlor substituierter Kohlenwasserstoffrest mit 1 bis 12 Kohlenstoffatomen,
**R''** einen mit Feuchtigkeit reaktiven Rest, der ausgewählt wird aus C₁-C₄-Alkoxy-, C₁-C₂₀-Acyl-, C₁-C₆-Alkylaminooxy- und C₁-C₆-Alkyloximoresten,
**W** einen Rest **B** oder Wasserstoff,
**m** den Wert 0, 1 oder 2,
**n** eine ganze Zahl von 1 bis 30,
**a** eine ganze Zahl von mindestens 1,
**b** 0 oder eine ganze Zahl von 1 bis 2000,
**c** eine ganze Zahl von 1 bis 30 und
**d** den Wert 0 oder 1 bedeuten,
mit der Maßgabe, daß, bezogen auf die Summe der Urethan- und Harnstoffgruppen, mindestens 30 Mol-% Urethangruppen enthalten sind.

2. Copolymer nach Anspruch 1, bei dem **n** eine ganze Zahl von 3 bis 400 bedeutet.

3. Copolymer nach Anspruch 1 oder 2, bei dem a eine ganze Zahl von höchstens 10 bedeutet.

4. Copolymer nach Anspruch 1 bis 3, bei dem b den Wert 0 bedeutet.

5. Copolymer nach Anspruch 1 bis 4, bei dem Y ein Alkylenrest ist.

6. Copolymer nach Anspruch 1 bis 5, bei dem, bezogen auf die Summe der Urethan- und Harnstoffgruppen, mindestens 50 Mol-% Urethangruppen enthalten sind.

7. Copolymer nach Anspruch 1 bis 6, bei dem A ein Sauerstoffatom ist.

8. Verfahren zur Herstellung der Copolymere gemäß Anspruch 1 bis 7, bei dem aminoalkyl- oder hydroxyalkylterminierte Polydiorganosiloxane der allgemeinen Formel 3 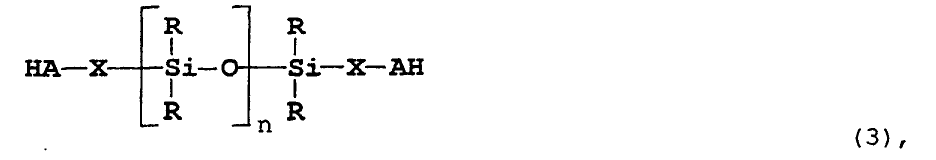 mit Diisocyanaten der allgemeinen Formel 4
OCN-Y-NCO (4),
und Silanen der allgemeinen Formel 5
E[-Z-Si(R¹)ₘ(R'')₃₋ₘ]ₚ (5),
und falls **b** mindestens 1 ist, zusätzlich mit α,ω-OHterminierten Alkylenen der allgemeinen Formel 6
HO-D-OH (6),
wobei **R, X, A, R', Y, D, B, Z, R**^{**1**}**, R'', W, m, n, a, b, c** und **d** die bei den allgemeinen Formeln 1 und 2 angegebenen Bedeutungen aufweisen und
**p** den Wert 1 bedeutet und
**E** eine Isocyanatogruppe oder eine Aminogruppe -NHR''', wobei **R'''** Wasserstoff oder einen einwertigen, gegebenenfalls durch Fluor oder Chlor substituierter Kohlenwasserstoffrest mit 1 bis 12 Kohlenstoffatomen bedeuten, oder
**p** den Wert 2 bedeutet und
**E** einen -NH-Rest bedeutet
umgesetzt werden.

9. Verfahren nach Anspruch 8, bei dem E eine Isocyanatogruppe ist.

10. Verwendung der Copolymere gemäß Anspruch 1 bis 7 und der gemäß Anspruch 8 und 9 hergestellten Copolymere als feuchtigkeitshärtendes Polymer, als Bestandteil in Klebund Dichtstoffen, als Basisstoff für thermoplastische und vulkanisierte Elastomere, für Membrane, als härtbare Zusatzstoffe in Polymerblends, für Beschichtungsanwendungen oder als biokompatible Materialien.

## Claims

1. Silane-terminated polydiorganosiloxane-urethane copolymer of the general formula 1 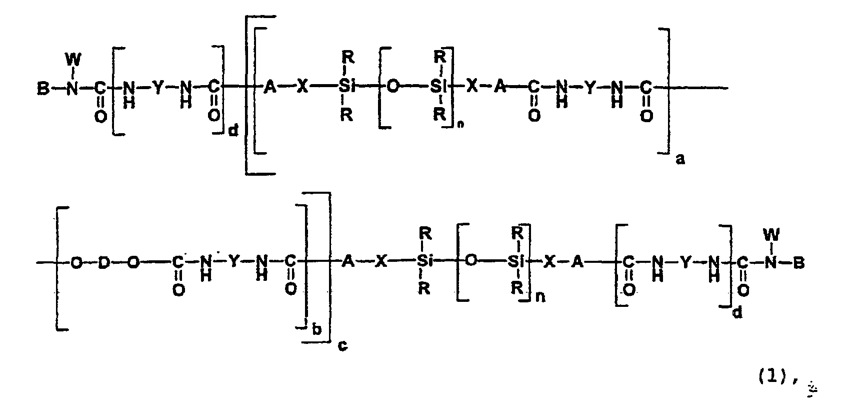 in which
**R** is a monovalent hydrocarbon radical optionally substituted by fluorine or chlorine and having 1 to 20 carbon atoms,
**X** is an alkylene radical having 1 to 20 carbon atoms in which methylene units not adjacent to one another may have been replaced by groups -O-,
**A** is an oxygen atom or an amino group -NR'-,
**R'** is hydrogen or an alkyl radical having 1 to 10 carbon atoms,
**Y** is a hydrocarbon radical optionally substituted by fluorine or chlorine and having 1 to 20 carbon atoms,
**D** is an alkylene radical optionally substituted by fluorine, chlorine, C₁-C₆-alkyl or C₁-C₆-alkyl ester and having 1 to 700 carbon atoms, in which methylene units not adjacent to one another may have been replaced by groups -O-, -COO-, -OCO-, or -OCOO-,
**B** is a radical of the general formula 2
-Z-Si(R¹)ₘ(R")₃₋ₘ (2),
**Z** is an alkylene radical having 1 to 10 carbon atoms,
**R**^{**1**} is a monovalent hydrocarbon radical optionally substituted by fluorine or chlorine and having 1 to 12 carbon atoms,
**R"** is a moisture-reactive radical selected from C₁-C₄-alkoxy, C₁-C₂₀-acyl, C₁-C₆-alkylaminooxy, and C₁-C₆-alkyloximo radicals,
**W** is a radical **B** or hydrogen,
**m** is 0, 1 or 2,
**n** is an integer from 1 to 30,
**a** is an integer of at least 1,
**b** is 0 or an integer from 1 to 2000,
**c** is an integer from 1 to 30, and
**d** is 0 or 1,
with the proviso that, based on the sum ofthe urethane groups and urea groups, at least 30 mol% of urethane groups are present.

2. Copolymer according to Claim 1, wherein **n** is an integer from 3 to 400.

3. Copolymer according to Claim 1 or 2, wherein **a** is an integer of not more than 10.

4. Copolymer according to Claim 1 to 3, wherein **b** is 0.

5. Copolymer according to Claim 1 to 4, wherein **Y** is an alkylene radical.

6. Copolymer according to Claim 1 to 5, containing, based on the sum ofthe urethane groups and urea groups, at least 50 mol% of urethane groups.

7. Copolymer according to Claim 1 to 6, wherein A is an oxygen atom.

8. Process for preparing the copolymers according to Claim 1 to 7, wherein aminoalkyl- or hydroxyalkyl-terminated polydiorganosiloxanes of the general formula 3 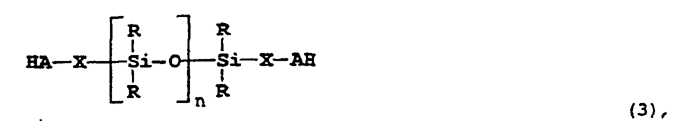 are reacted with diisocyanates of the general formula 4
OCN-Y-NCO (4),
and silanes of the general formula 5
E[-Z-Si(R¹)ₘ(R")₃₋ₘ]ₚ (5),
and, if **b** is at least 1, additionally with α,ω-OH-termimated alkylenes of the general formula 6
HO-D-OH (6),
where **R, X, A, R', Y, D, B, Z, R**^{**1**}**, R", W, m, n, a, b, c,** and **d** have the definitions indicated for the general formulae 1 and 2 and
**p** is 1 and
**E** is an isocyanate group or an amino group -NHR''', in which **R'''** is hydrogen or a monovalent hydrocarbon radical optionally substituted by fluorine or chlorine and having 1 to 12 carbon atoms, or
**P** is 2 and
**E** is an -NH radical.

9. Process according to Claim 8, wherein E is an isocyanato group.

10. Use ofthe copolymers according to Claim 1 to 7 and of the copolymers prepared as in Claim 8 and 9 as moisture-curing polymer, as a constituent in adhesives and sealants, as a base material for thermoplastic and vulcanized elastomers, for membranes, as curable additives in polymer blends, for coating applications or as biocompatible materials.

## Revendications

1. Copolymère de polydiorganosiloxane et d'uréthanne terminé par silane de formule générale 1 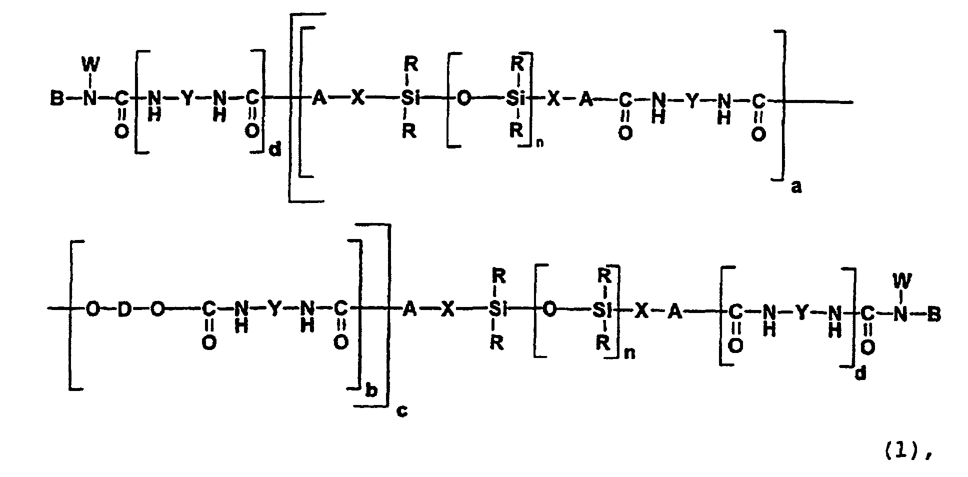 dans laquelle
R signifie un radical hydrocarboné monovalent, le cas échéant substitué par fluor ou chlore, comprenant 1 à 20 atomes de carbone,
X signifie un radical alkylène comprenant 1 à 20 atomes de carbone, dans lequel des unités méthylène non adjacentes peuvent être remplacées par des groupes -O-,
A signifie un atome d'oxygène ou un groupe amino -NR'-,
R' signifie hydrogène ou un radical alkyle comprenant 1 à 10 atomes de carbone,
Y signifie un radical hydrocarboné le cas échéant substitué par fluor ou chlore comprenant 1 à 20 atomes de carbone,
D signifie un radical alkylène le cas échéant substitué par fluor, chlore, alkyle en C₁ à C₆ ou ester d'alkyle en C₁ à C₆, comprenant 1 à 700 atomes de carbone, dans lequel des unités méthylène non adjacentes peuvent être remplacées par des groupes -O-, -COO-, -OCO- ou -OCOO-,
B signifie un radical de formule générale 2
-Z-Si(R¹)ₘ(R'')₃₋ₘ (2),
Z signifie un radical alkylène comprenant 1 à 10 atomes de carbone,
R¹ signifie un radical hydrocarboné monovalent, le cas échéant substitué par fluor ou chlore, comprenant 1 à 12 atomes de carbone,
R'' signifie un radical réactif avec l'humidité, qui est choisi parmi les radicaux alcoxy en C₁ à C₄, acyle en C₁ à C₂₀, (alkyle en C₁ à C₆) aminooxy et (alkyle en C₁ à C₆)oxime,
W signifie un radical B ou hydrogène,
m signifie la valeur 0, 1 ou 2,
n signifie un nombre entier de 1 à 30,
a signifie un nombre entier d'au moins 1,
b signifie 0 ou un nombre entier de 1 à 2000,
c signifie un nombre entier de 1 à 30 et
d signifie la valeur 0 ou 1,
à condition qu'au moins 30% en mole de groupes uréthanne soient contenus par rapport à la somme des groupes uréthanne et urée.

2. Copolymère selon la revendication 1, dans lequel n représente un nombre entier de 3 à 400.

3. Copolymère selon la revendication 1 ou 2, dans lequel a représente un nombre entier d'au maximum 10.

4. Copolymère selon la revendication 1 à 3, dans lequel b signifie la valeur 0.

5. Copolymère selon la revendication 1 à 4, dans lequel Y est un radical alkylène.

6. Copolymère selon la revendication 1 à 5, dans lequel sont contenus au moins 50% en mole de groupes uréthanne par rapport à la somme des groupes uréthanne et urée.

7. Copolymère selon la revendication 1 à 6, dans lequel A est un atome d'oxygène.

8. Procédé pour la préparation des copolymères selon la revendication 1 à 7, dans lequel on transforme des polydiorganosiloxanes à terminaison aminoalkyle ou hydroxyalkyle de formule générale 3 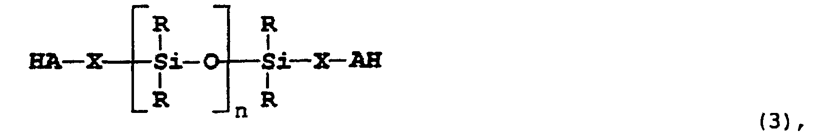 avec des diisocyanates de formule générale 4
OCN-Y-NCO (4),
et des silanes de formule générale 5
E[-Z-Si(R¹)ₘ(R'')₃₋ₘ]ₚ (5),
et, dans le cas où b signifierait au moins 1, en outre avec des alkylènes à terminaison α,ω-OH de formule générale 6
HO-D-OH (6),
où R, X, A, R', Y, D, B, Z, R¹, R", W, m, n, a, b, c et d ont les significations indiquées pour les formules générales 1 et 2 et
p signifie la valeur 1 et
E signifie un groupe isocyanato ou un groupe amino -NHR''', où R''' signifie hydrogène ou un radical hydrocarboné monovalent, le cas échéant substitué par fluor ou chlore comprenant 1 à 12 atomes de carbone ou
p signifie la valeur 2 et
E signifie un radical -NH.

9. Procédé selon la revendication 8, dans lequel E représente un groupe isocyanato.

10. Utilisation des copolymères selon la revendication 1 à 7 et préparés selon la revendication 8 et 9 comme polymère durcissant à l'humidité, comme constituant de substances adhésives et d'étanchéité, comme substance de base pour les élastomères thermoplastiques et vulcanisés, pour des membranes, comme additifs durcissables dans les mélanges de polymères, pour des utilisations de revêtement ou comme matériaux biocompatibles.
